# EUROPÄISCHE PATENTSCHRIFT

(11) **EP 0 512 507 B1**
(45) Veröffentlichungstag und Bekanntmachung des Hinweises auf die Patenterteilung: **30.08.1995**
(21) Anmeldenummer: 92107641.0
(22) Anmeldetag: 06.05.1992
(51) Int. Cl.: B65G 27/32, B65G 47/19, B65G 43/08, G01G 11/08, G05D 7/06, B65G 27/34

(54) **Schaltsystem zum selbsttätigen Zu- und Abschalten von mehreren hintereinandergeschalteten, einen Förderstrang bildenden Förderorganen**
Control system for automatically connecting or disconnecting conveyors lined up one behind the other and forming a conveyor line
Système de contrôle pour la connexion ou la disjonction automatique de convoyeurs placés en série pour former une ligne de transport

(30) Priorität: 06.05.1991 DE 4114655
(43) Veröffentlichungstag der Anmeldung: 11.11.1992
(73) Patentinhaber: Klöckner-Humboldt-Deutz Aktiengesellschaft, 51149 Köln (DE)
(72) Erfinder: Jordan, Günther, Dipl.-Ing., D-45711 Datteln (DE)

(56) Entgegenhaltungen:
- EP-A- 0 143 762
- EP-A- 0 171 557
- US-A- 4 002 270

## Beschreibung

Die Erfindung betrifft ein Schaltsystem zum selbsttätigen Zu- und Abschalten von mehreren hintereinandergeschalteten einen Förderstrang bildenden Förderorganen, die mit materialflußüberwachenden Signalgebern ausgerüstet sind.

Die Steuerung eines solchen Systems hintereinandergeschalteter Förderorgane zur Aufrechterhaltung einer kontinuierlichen Materialförderung macht es erforderlich, die von den Signalgebern ausgehenden Signale auszuwerten und so zu verknüpfen, daß die einzelnen Förderorgane aufgrund materialflußabhängiger Parameter, beispielsweise einer bestimmten Füllstandshöhe des Fördergutes,auf dem Förderorgan, ein- oder ausgeschaltet werden. Die Steuerung erfolgt hierbei über eine elektronische Einrichtung, die die Signale der Signalgeber untereinander verknüpft und im wesentlichen aus binären Elementargliedern besteht.

Aus der Patentschrift EP-B-0 171 557 ist ein Schaltsystem mit drei hintereinandergeschalteten Schwingförderrinnen als Bunkerabzugssystem bekannt, die einen Förderstrang bilden und die mit materialflußüberwachenden Digital-Signalgebern als Bunker-Füllstands-Meßvorrichtung ausgerüstet sind.

Nachteilig bei diesem bekannten Schaltsystem mit digitalen Signalgebern ist einmal die erforderlich große Meßstrecke, z. B. wenn der Signalgeber ein Näherungsschalter ist, zur reproduzierbaren störungsfreien Steuerung mehrerer verknüpfter Förderorgane. Weiterhin können Änderungen der Schaltpunkte in Abhängigkeit z. B. von der Füllstandshöhe nur mechanisch am Förderorgan durch Veränderung der Lage des Signalgebers durchgeführt werden.

Der Erfindung liegt die Aufgabe zugrunde, ein Schaltsystem zu schaffen, das selbst bei kleinen Meßstrecken auch während des Betriebs der Förderorgane gestattet, diese aufgrund materialflußbedingter Veränderungen einstellen zu können.

Die Lösung der gestellten Aufgabe gelingt bei einem Schaltsystem der eingangs genannten Art durch die Maßnahmen des Kennzeichnungsteils des Anspruchs 1.

Durch die erfindungsgemäße Anordnung von Analog-Signalgebern an den Förderorganen steht zu jedem Zeitpunkt auch bei kleinen Meßstrecken ein dem Beladungszustand des Förderorgans proportionales Meßsignal an. Hierdurch ist es möglich, durch entsprechende elektrische Festlegung der Schaltpunkte, die auch z. B. in einer Schaltwarte erfolgen kann, die Förderorgane mit ihren Fördermengen der gewünschten Aufgabenstellung entsprechend während des laufenden Betriebes durch beladungsproportionales Zu- oder Abschalten einzelner Förderorgane anzupassen und zu überwachen.

Durch eine weitere vorteilhafte Ausgestaltung der Erfindung sind die einzelnen Förderorgane gemäß Anspruch 2 so miteinander verriegelt, daß sichergestellt ist, daß nur die Förderorgane eingeschaltet werden, die zur Aufrechterhaltung des Materialflusses erforderlich sind.

Die Erfindung ist in den Zeichnungen näher beschrieben und wird nachfolgend an einem Ausführungsbeispiel erläutert.

Es zeigt:
- Fig. 1: schematisch die Anordnung von Förderorganen unter einem Bunker;
- Fig. 2: einen Schnitt durch ein Förderorgan;
- Fig. 3: den Schaltplan für ein System mit vier Förderorganen.

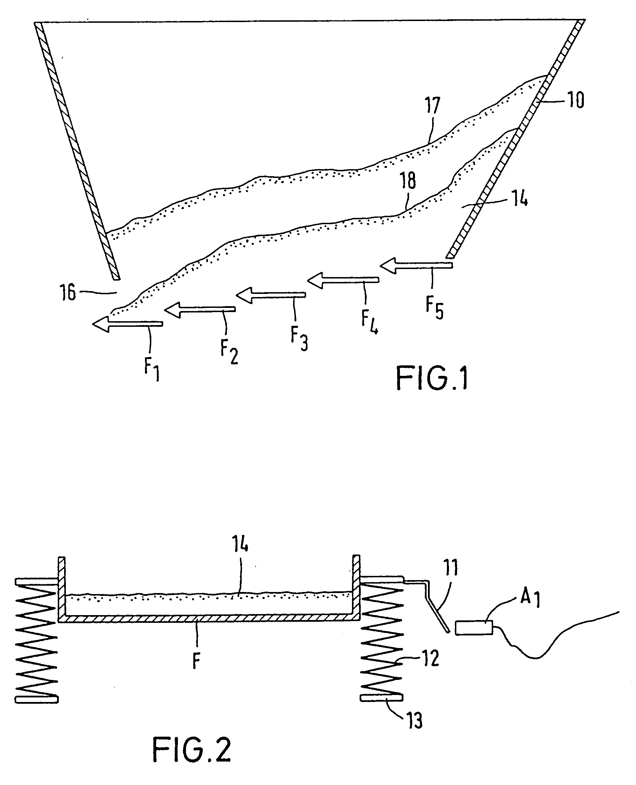

Gemäß Fig. 1 wird das im Bunker (10) befindliche Fördergut (14) in Pfeilrichtung über die unterhalb des Bunkers angeordneten Förderorgane (F₁ bis F₅) - beginnend mit dem Förderorgan (F₁) - zur Bunkeröffnung (16) gefördert.

Jedes dieser Förderorgane (F) ist, wie Fig. 2 zeigt, auf mit dem Fundament (13) verbundenen Federelementen (12) angeordnet, die entsprechend ihrer Federkonstanten proportional zur auf den Förderorgan befindlichen Fördergutmenge (14) zusammengedrückt werden. Eine seitlich am Förderorgan (F) befestigte Meßfahne (11) verändert durch das Zusammendrücken der Federelemente ihren Abstand zu einem ortsfest angeordneten Analog-Signalgeber (A₁), wodurch ein der Fördergutmenge proportionales Meßsignal (Elektronik-Einheitssignal) erzeugt wird.

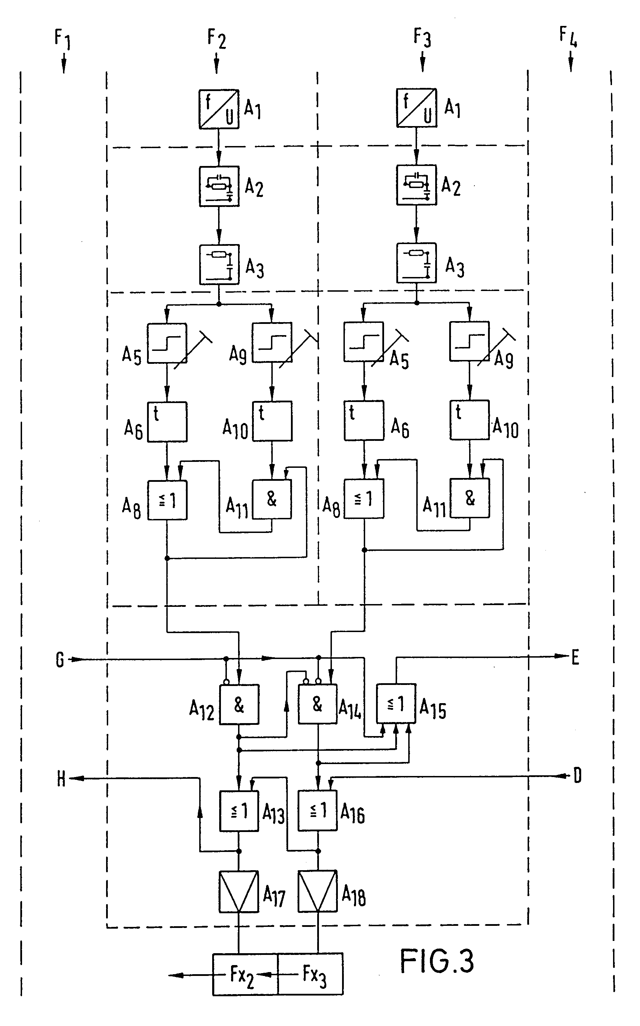

Entsprechend dem Schaltplan (Fig. 3) wird z. B. für das Förderorgan (F₂) im nachgeschalteten Tiefpaß (A₂) ein dem Elektronik-Einheitssignal überlagerter möglicher Rest-Wechselstromanteil weitgehend herausgefiltert und mittels Vierpol (A₃) integriert. Am Schwellwertschalter (A₅) wird die Beladungshöhe für das Förderorgan (F₂) eingestellt, bei der die Einschaltung des zugehörigen Förderorgans (F₂) erfolgen soll. Der Schwellwertschalter (A₉) dient zur Einstellung, bei der das Förderorgan (F₂) abgeschaltet werden soll. An (A₅) werden folglich größere Schwellwerte als an (A₉) gestellt.

Überschreitet das Elektroniksignal am Schwellwertschalter (A₅, A₉) den vorab eingestellten Schwellwert, so wechselt der Ausgang des entsprechenden Schwellwertschalters von 0- auf 1-Signal. Wechselt nun der Schwellwertschalter (A₅) (Startbeladung = z. B. Beladungshöhe (17)) sein Ausgangssignal von 0 nach 1, startet die anzugverzögerte Zeitstufe (A₆). Nach Ablauf der einstellbaren Zeitstufe (A₆) wechselt der Ausgang dieser Zeitstufe von 0- auf 1-Signal. Der Ausgang des Oder-Glieds (A₈) führt folglich nun 1-Signal. Ausgehend davon, daß am Eingang (G) 0-Signal ansteht (gleichbedeutend, daß das in Förderrichtung liegende Förderorgan (F₁) keine Beladung aufweist, die seinen Start einleitet), wechselt das &-Glied (A₁₂) von 0- auf 1-Signal.

Gleichfalls führt nun das Oder-Glied (A₁₃) 1-Signal. Das Förderorgan (F₂) wird über Verstärkerstufe (A₁₇), bestehend aus Signal-Verstärker- und Relaisschaltstufe (Fₓ₂) eingeschaltet. Mit dem Ausgang des Oder-Glieds (A₁₃) führt auch der Ausgang (H) 1-Signal und schaltet das in Förderrichtung liegende Förderorgan (F₁) ein. Der Ausgang der &-Glieds (A₁₂) sperrt durch seine Negation das &-Glied (A₁₄) und das nächste, diesem Förderer zufördernde Förderorgan (F₃) kann nicht starten. Alle weiteren - diesem Förderorgan (F₃) zufördernden Förderer - werden über den Ausgang (E) des Oder-Glieds (A₁₅) an einer Einschaltung gehindert.

Mit weniger werdender Beladung auf dem Förderorgan (F₂) sinkt das Analog-Signal am Schwellwertschalter (A₅), dessen Ausgang bei Unterschreiten der eingestellten Schwellwertspannung von 1 auf 0-Signal wechselt. Da am Schwellwertschalter (A₉) ein kleinerer Schwellwert als am Schwellwertschalter (A₅) eingestellt wurde (z. B. Beladungshöhe (18)), ist dessen Ausgang noch auf 1-Signal und bewirkt über die rückfallverzögerte Zeitstufe (A₁₀) über &-Glied (A₁₁) und Oder-Glied (A₉), daß das in Förderrichtung liegende Förderorgan (F₁) unterbrechungslos weiterläuft. Sinkt die Schwellwertspannung am Schwellwertschalter (A₉) unter den eingestellten Wert, so wechselt dessen Ausgang auch auf 0-Signal. Das abzugverzögerte Zeitrelais (A₁₀) läuft ab. Nach Ablauf der eingestellten Zeit, wechselt auch das Zeitrelais (A₁₀) von 1- auf 0-Signal. Hierdurch wechseln die Verknüpfungs-Glieder (A₁₁, A₉, A₁₂) ihren Ausgang auf 0-Signal und die Einschaltwirkung des entsprechenden Beladungsmeßkreises verlöscht. Das in Förderrichtung liegende Förderorgan (F₁) läuft jedoch unterbrechungslos weiter, wenn das Oder-Glied (A₁₆) oder der Eingang (D) 1-Signal führt. Der entsprechende Zuförderer (F₄) schaltet sich hinzu.

Sobald ein Förderorgan, das weiter in Förderrichtung liegt, eine für den Betrieb erforderliche Beladung aufweist, werden alle weiteren diesem Förderorgan zufördernden Förderorgane abgeschaltet. Durch entsprechende Standardisierung des Schaltsystems ist es möglich, mit geringem Material-, Konstruktions- und Kostenaufwand die Schaltungen entsprechend den Förderorganen hintereinander anzuordnen, wobei die aufwendige Verdrahtung wegfällt.

## Patentansprüche

1. Schaltsystem zum selbsttätigen Zu- und Abschalten von mehreren hintereinandergeschalteten, einen Förderstrang bildenden Förderorganen, insbesondere Bunkerabzugsrinnen, die mit materialflußüberwachenden Signalgebern ausgerüstet sind, die mit untereinander verknüpften, den jeweiligen Förderorganen (F) zugeordneten Verriegelungsschaltungen verbunden sind, dadurch gekennzeichnet, daß die Signalgeber (A₁) materialflußproportionale analoge Signale zu den zugeordneten Verriegelungsschaltungen senden und die Verriegelungsschaltungen im wesentlichen aus analogen Schwellwertschaltern (A₅, A₉), Zeitstufen (A₆, A₁₀) und binären Elementargliedern (A₈, A₁₁, A₁₂, A₁₃, A₁₄, A₁₅, A₁₆) ausgebildet sind.

2. Schaltsystem nach Anspruch 1, dadurch gekennzeichnet, daß der dem jeweiligen Förderorgan (F) zugeordnete Analog-Signalgeber (A₁) mit einer Signalformerstufe (A₂, A₃) der jeweiligen Verriegelungsschaltung verbunden ist, wobei den Signalformungsstufen (A₂, A₃) Schwellwertschalter (A₅, A₉) mit Zeitstufen (A₆, A₁₀) nachgeschaltet sind, die ihrerseits wiederum über Logikstufen (A₈, A₁₁) mit den Signalverknüpfungsstufen (A₁₂, A₁₃, A₁₄, A₁₅, A₁₆) verbunden sind; die über Verstärkerstufen (A₁₇, A₁₈) mit dem Schaltrelais (Fx) des jeweiligen Förderorgans (F) und mit der Signalverknüpfungsstufe des jeweils zuoder abfördernden Förderorgangs (F) in Verbindung steht.

3. Schaltsystem nach Anspruch 1 oder 2, dadurch gekennzeichnet, daß die binären Elementarglieder aus NOR-, Nandgliedern und Schwellwertschaltern bestehen.

4. Schaltsystem nach den Ansprüchen 1 bis 3, dadurch gekennzeichnet, daß die Ein- und Abschaltpunkte - entsprechend der Beladehöhe auf dem jeweiligen Förderer - getrennt und frei einstellbar angeordnet sind.

5. Schaltsystem nach den Ansprüchen 1 bis 4, dadurch gekennzeichnet, daß wenigstens zwei, vorzugsweise drei Förderorgane miteinander verknüpft sind.

## Claims

1. A switching or control system for the automatic connection and disconnection of a plurality of conveyor elements, especially hopper discharge chutes, arranged in series and forming a conveyor section, the elements being provided with material flow-monitoring signalling transmitters which are linked to interconnected interlocking circuits assigned to the respective conveyor elements (F), characterised in that the signalling transmitters (A₁) send analogue signals proportional to the material flow to the assigned interlocking circuits and the interlocking circuits essentially comprise analogue threshold switches (A₅, A₉), time stages (A₆, A₁₀) and binary basic elements (A₈, A₁₁, A₁₂, A₁₃, A₁₄, A₁₅, A₁₆).

2. A switching or control system according to claim 1, characterised in that the analogue signalling transmitter (A₁) assigned to the respective conveyor element (F) is connected to a signal conditioner stage (A₂, A₃) of the respective interlocking circuit, and threshold switches (A₅, A₉) with time stages (A₆, A₁₀) are connected in series with the signal conditioner stages (A₂, A₃), the said time stages (A₆, A₁₀) for their part being connected via logic stages (A₈, A₁₁) to the signal connecting stages (A₁₂, A₁₃, A₁₄, A₁₅, A₁₆) which are connected via amplifier stages (A₁₇, A₁₈) to the switching relay (Fx) of the respective conveyor element (F) and to the signal connecting stage of the respective feed or discharge conveyor element (F).

3. A switching or control system according to either claim 1 or 2, characterised in that the binary basic elements comprise NOR elements, NAND elements and threshold switches.

4. A switching or control system according to any one of claims 1 to 3, characterised in that the switching-in and disconnection points - corresponding to the height or amount of load on the respective conveyor - are arranged separately and are freely adjustable.

5. A switching or control system according to any one of claims 1 to 4, characterised in that at least two and preferably three conveyor elements are connected to each other.

## Revendications

1. Système de branchement pour brancher et débrancher automatiquement plusieurs organes de transport formant une ligne de convoyeur, montés les uns derrière les autres, en particulier des goulottes d'extraction à partir d'un silo, organes qui sont équipés de capteurs de signaux contrôlant le flux de matière, et qui sont reliés à des branchements de verrouillage combinés entre eux, qui correspondent aux organes respectifs de transport (F), système de branchement caractérisé en ce que les capteurs de signaux (A₁) émettent des signaux analogiques proportionnels au flux de matière vers les branchements de verrouillage correspondants et les branchements de verrouillage sont constitués essentiellement par des interrupteurs analogiques à seuil (A₅, A₉), des étages de temporisation (A₆, A₁₀) et des organes élémentaires binaires, (A₈, A₁₁, A₁₂, A₁₃, A₁₄, A₁₅, A₁₆).

2. Système de branchement selon la revendication 1, caractérisé en ce que le capteur de signal analogique (A₁) correspondant à l'organe respectif de transport (F) est relié à un étage de formation du signal (A₂, A₃) du branchement correspondant de verrouillage, des interrupteurs à valeur de seuil (A₅, A₉) étant montés en aval des étages de formation des signaux (A₂, A₃) avec des étages de temporisation (A₆, A₁₀), qui de leur côté sont reliés à leur tour par des étages logiques (A₈, A₁₁) aux étages de combinaison de signaux (A₁₂, A₁₃, A₁₄, A₁₅, A₁₆), qui sont en liaison par des étages d'amplification (A₁₇, A₁₈) avec le relais de commutation (Fₓ) de l'organe de transport correspondant (F) et avec l'étage de combinaison de signaux de l'organe de transport (F) respectivement à mettre en marche ou arrêter.

3. Système de branchement selon la revendication 1 ou 2, caractérisé en ce que les organes élémentaires binaires consistent en organes N OU, organes N ET et interrupteurs à valeur de seuil.

4. Système de branchement selon les revendications 1 à 3, caractérisé en ce que les points de branchement et de débranchement - correspondant au niveau de chargement sur le convoyeur respectif - sont disposés de façon séparée et peuvent être librement réglés.

5. Système de branchement selon les revendications 1 à 4, caractérisé en ce que l'on combine au moins deux et de préférence trois organes de transport ensemble.
